# EUROPEAN PATENT APPLICATION

(11) **EP 4 691 846 A1**
(43) Date of publication of application: **11.02.2026**
(21) Application number: 23929257.6
(22) Date of filing: 29.03.2023
(51) Int. Cl.: B60N 2/36, B60R 5/04

(54) **SEAT ADJUSTING APPARATUS, SEAT STRUCTURE AND MOVABLE DEVICE**

(71) Applicant: Shenzhen Yinwang Intelligent Technologies Co., Ltd., Shenzhen, Guangdong 518110 (CN)
(72) Inventor: SUN, Jian, Shenzhen, Guangdong 518129 (CN); SHI, Hao, Shenzhen, Guangdong 518129 (CN); XU, Hao, Shenzhen, Guangdong 518129 (CN); ZHAO, Cong, Shenzhen, Guangdong 518129 (CN); LONG, Zhen, Shenzhen, Guangdong 518129 (CN); ZHU, Xin, Shenzhen, Guangdong 518129 (CN)
(74) Representative: Gill Jennings & Every LLP
(86) International application number: PCT/CN2023/084823
(87) International publication number: WO 2024/197658

(57) **Abstract**

A seat adjustment apparatus (500) is provided. The seat adjustment apparatus includes a bracket structure (510), a first cover plate (521), and a second cover plate (522). A first end (a₁) of the bracket structure (510) is fastened to a seat pan framework of a seat, and a second end of the bracket structure is connected to a first end (b₁) of the first cover plate and a first end (c₁) of the second cover plate, and is configured to implement relative rotation between the first cover plate and the second cover plate. A second end of the first cover plate presses against a trunk trim panel, and a second end of the second cover plate presses against a backrest of the seat. A seat structure including the seat adjustment apparatus and a mobile device including the seat structure are further provided.

## Description

### TECHNICAL FIELD

This application relates to the field of mechanical design technologies, and provides a seat adjustment apparatus, a seat structure, and a mobile device.

### BACKGROUND

With rapid development of vehicles, users have an increasingly high requirement for comfort of the vehicles. To meet the requirement of the users, a movable seat is designed for some vehicles, to meet requirements of different users for comfort by adjusting a rotation angle and a sliding position of the seat. However, there is still a disadvantage in the design of the seat currently, especially a rear-row seat. For example, when the rear-row seat slides to the frontmost, an ineffective area is formed between the rear-row seat and a trunk trim panel, occupying storage space of a trunk. This is not conducive to improving user experience.

Therefore, a current design scheme for seat movement needs to be further studied.

### SUMMARY

This application provides a seat adjustment apparatus, a seat structure, and a mobile device, to reduce impact of sliding of a seat on storage space of a trunk, and improve user experience.

According to a first aspect, this application provides a seat adjustment apparatus, including a bracket structure, a first cover plate, and a second cover plate. A first end of the bracket structure is fastened to a seat pan frame of a seat. A second end of the bracket structure is connected to a first end of the first cover plate and a first end of the second cover plate, and is configured to implement relative rotation between the first cover plate and the second cover plate. A second end of the first cover plate presses against a trunk trim panel. A second end of the second cover plate presses against a backrest of the seat.

It should be noted that, that one component presses against another component means that the component rests against the another component under pressure, and a contact endpoint of the component may only be in contact with the another component without being fastened on the another component, or may be directly fastened on the another component. This is not specifically limited.

The seat adjustment apparatus is used, so that, when the seat pan frame drives the seat to slide forward/backward, the second cover plate may be synchronously driven by using the bracket structure to move forward/backward accordingly, to avoid a new ineffective area generated due to forward/backward sliding of the seat to a maximum extent, occupy less storage space of a trunk, and improve user experience. In addition, the seat adjustment apparatus is used, so that, regardless of a position to which the seat backrest rotates, a gap between the trunk trim panel and the seat backrest can be shielded by the first cover plate, the second cover plate, and the bracket structure. A foreign object can be prevented from falling into the gap, and the seat adjustment apparatus has an attractive and elegant appearance. In addition, the seat adjustment apparatus is load-bearing, and aesthetic and tidiness of a cabin can be effectively improved.

In a possible design, the bracket structure may include an extended bracket and an elastic hinge. A first end of the extended bracket is the first end of the bracket structure. The elastic hinge is fastened at a second end of the extended bracket, and is connected to the first end of the first cover plate and the first end of the second cover plate. The elastic hinge means a hinge on which an elastic mechanism is mounted, and the elastic mechanism may be a spring, a coil spring, or another similar structure. Specifically, the elastic hinge includes a rotating shaft and two leaves disposed around the rotating shaft. The first end of the first cover plate may be fastened on one of the leaves, and the second end of the first cover plate may be fastened on the other leaf, so that the first cover plate and the second cover plate rotate relative to each other through rotation of the first leaf or the second leaf around the rotating shaft.

In the foregoing design, the elastic hinge is a common rotating connection member. The elastic hinge is used, to implement relative rotation of the first cover plate and the second cover plate, so that manufacturing costs of the seat adjustment apparatus can be reduced, and a structure and a mounting manner of the seat adjustment apparatus can be simplified.

In a possible design, the bracket structure may further include an extended beam. The extended beam is fastened at a second end of the extended bracket, and is configured to mount the elastic hinge, to implement a fastening and supporting function.

In a possible design, the first cover plate and the second cover plate are integrally formed, to further improve the aesthetic of the seat structure.

In a further design, the first end of the first cover plate and the first end of the second cover plate may be connected through a soft material. The soft material may be a blanket, elastic fabric, rubber, a thread buckle, silicone, a thermoplastic polyurethane (thermoplastic polyurethane, TPU) elastomer, a thermoplastic elastomer (thermoplastic elastomer, TPE), a thermoplastic rubber (thermoplastic rubber, TPR), or another elastic material. When the seat backrest is folded, the soft material is in a minimum compression state. In a process in which the seat slides forward/backward or the seat backrest rotates, the soft material is compressed or relaxed accordingly, so that the second cover plate rotates around the first cover plate under pressure of the soft material, to adaptively adjust a position at which the second cover plate presses against the seat backrest.

In a possible design, the second cover plate may include an elastic material, and the second end of the second cover plate is fastened to the backrest of the seat. The elastic material may be elastic fabric, spring steel, rubber, sponge, latex, or the like, or may be a cross-linked reaction product of a mixture of polymer hydrogel and at least one of uncured elastic fabric, spring steel, rubber, sponge, or latex, or another elastic material. The elastic material has a lighter weight than a rigid material. Therefore, the second cover plate is made by using the elastic material, and the second end of the second cover plate is fastened on the seat backrest, so that, through scalable deformation of the elastic material, a groove and a gap generated in the process in which the seat backrest rotates can be shielded, and an ineffective area generated in the process in which the seat slides forward/backward can be reduced. In addition, a weight of the seat adjustment apparatus can be reduced. This helps realize a lightweight design of a mobile device.

In a possible design, an opening groove is provided at a position that is of the trunk trim panel and that corresponds to the first cover plate, and the first cover plate is embedded into the opening groove, to press against the trunk trim panel. In this way, in the process in which the seat slides forward/backward or the seat backrest rotates, the first cover plate can slide in a direction of the opening groove, to adaptively adjust a position at which the first cover plate presses against the trunk trim panel.

In a further design, the second end of the first cover plate may include an elastic material, and the second end of the first cover plate is fastened to an end of the opening groove relative to the first cover plate. In this way, even if the first end of the first cover plate slides forward/backward, the entire opening groove can be completely covered through stretching or compression of the elastic material at the second end, to ensure that there is no gap at a position at which the first cover plate is in contact with the trunk trim panel, so that a foreign object is effectively prevented from falling into the gap.

In a further design, the second end of the first cover plate may be realized by using an elastic mechanism, for example, a spring or a coil spring, or an elastic mechanism, for example, a spring or a coil spring, disposed inside the second end and wrapped with a soft housing, for example, elastic fabric, on the outside, to make a more attractive appearance of the first cover plate.

In a further design, an upper surface of the trunk trim panel is flush with an upper surface of the first cover plate. In this way, aesthetic of the cabin can be improved. In addition, a boss or a dent can be prevented from being generated between the first cover plate and the trunk trim panel in the process in which the seat moves forward/backward or the seat backrest rotates. This facilitates placement of luggage, and improves practicability.

It should be noted that the foregoing designs may be combined with each other to obtain a new implementation solution. This is not specifically limited.

According to a second aspect, this application provides a seat structure, including a seat, a seat pan frame, a trunk trim panel, and the seat adjustment apparatus according to any design of the first aspect. The seat pan frame is disposed below the seat, and is configured to drive the seat to slide. The trunk trim panel is disposed behind the seat, and is used for placing luggage.

According to a third aspect, this application provides a mobile device, including the seat structure according to the second aspect.

For beneficial effects of the second aspect and the third aspect, specifically refer to technical effects that can be achieved by corresponding designs in the first aspect. Details are not described herein again.

### BRIEF DESCRIPTION OF DRAWINGS

FIG. 1 is a diagram of an example of a structure of a mobile device according to an embodiment of this application;
FIG. 2 is a diagram of an example of a structure of a seat in different rotation states according to the industry;
FIG. 3 is a diagram of an example of a structure of a new seat structure according to the industry;
FIG. 4 is a diagram of an example of a structure of an adjusted new seat structure at different sliding positions according to the industry;
FIG. 5 is a diagram of an example of a structure of a seat adjustment apparatus according to an embodiment of this application;
FIG. 6 is a diagram of a specific structure of a seat adjustment apparatus according to an embodiment of this application;
FIG. 7 is a diagram of an example of a structure of an elastic hinge according to an embodiment of this application;
FIG. 8 is a diagram of an example of a structure of a seat structure in different states according to an embodiment of this application;
FIG. 9 is a diagram of a specific structure of another seat adjustment apparatus according to an embodiment of this application;
FIG. 10 is a diagram of an example of a structure of a seat structure in different states according to an embodiment of this application;
FIG. 11 is a diagram of a specific structure of still another seat adjustment apparatus according to an embodiment of this application;
FIG. 12 is a diagram of a specific structure of a first cover plate according to an embodiment of this application;
FIG. 13 is a diagram of an example of a structure of a seat structure in different states according to an embodiment of this application;
FIG. 14 is a diagram of a specific structure of yet another seat adjustment apparatus according to an embodiment of this application;
FIG. 15 is a diagram of an example of a structure of still another seat adjustment apparatus according to an embodiment of this application;
FIG. 16 is a diagram of an example of a structure of another seat adjustment apparatus according to an embodiment of this application;
FIG. 17 is a diagram of an example of a structure of yet another seat adjustment apparatus according to an embodiment of this application;
FIG. 18 is a diagram of an example of a structure of another seat adjustment apparatus according to an embodiment of this application; and
FIG. 19 is a diagram of an example of a structure of still another seat adjustment apparatus according to an embodiment of this application.

### DESCRIPTION OF EMBODIMENTS

To make objectives, technical solutions, and advantages of embodiments of this application clearer, the following clearly and completely describes the technical solutions in embodiments of this application with reference to accompanying drawings.

It should be noted that the following example implementations can be implemented in a plurality of forms, and should not be construed as being limited to the implementations described below. On the contrary, providing these implementations makes embodiments of this application more comprehensive and complete, and can comprehensively convey a concept of embodiments to a person skilled in the art. In addition, specific details described in the following descriptions are intended to help a person skilled in the art fully understand embodiments of this application. However, it should be understood that embodiments of this application can be implemented in a plurality of manners other than those described herein. A person skilled in the art may make similar promotion without departing from the connotation of this application. In other words, embodiments of this application are not limited to the specific implementations disclosed below. Similarly, subsequent descriptions in this specification are all example implementations of embodiments of this application. Certainly, the descriptions are intended to describe general principles of embodiments of this application, but are not intended to limit the scope of embodiments of this application. The protection scope of embodiments of this application is subject to the definition of the appended claims.

In addition, the accompanying drawings in embodiments of this application are merely used to illustrate a relative position relationship and do not represent an actual scale. Expressions of positions and directions in embodiments of this application are all described by using the accompanying drawings as an example. However, changes may also be made as required, and all the changes fall within the protection scope of embodiments of this application. Identical reference numerals in the accompanying drawings represent identical or similar structures. Therefore, repeated descriptions thereof are omitted.

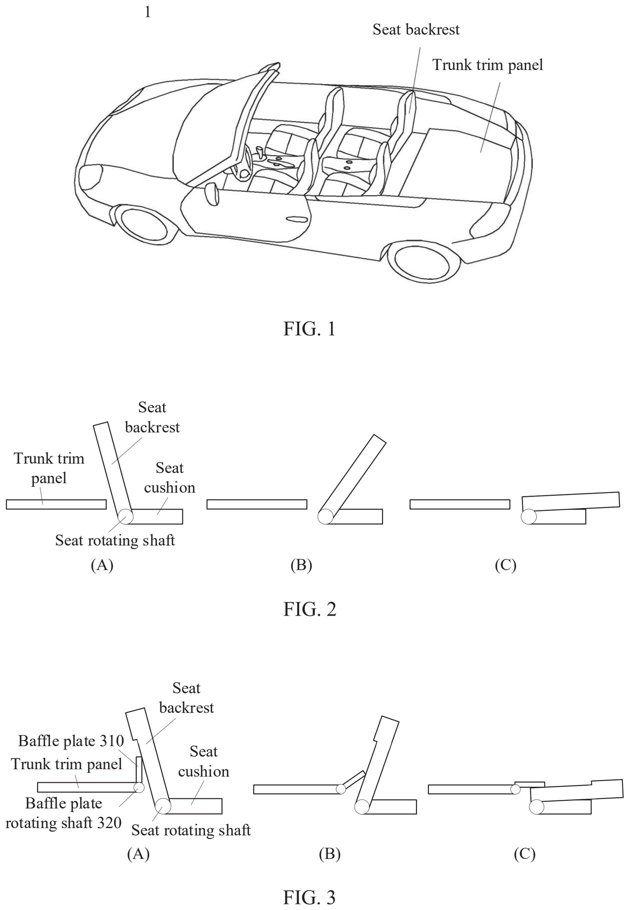

FIG. 1 is a diagram of a structure of a mobile device according to an embodiment of this application. The mobile device 1 may be an intelligent transportation device, for example, a vehicle, a ship, an uncrewed aerial vehicle, a train, a lorry, a truck, an aircraft, or a yacht, or a device in another form that has a function of carrying people or goods. This is not limited in this embodiment of this application. The mobile device 1 in the embodiment shown in FIG. 1 is described by using a vehicle as an example. A plurality of seats available for passengers to sit in are disposed in a cabin of the vehicle, including a front-row seat and a rear-row seat. The front-row seat is also referred to as a 1^{st}-row seat, and the rear-row seat includes a 2^{nd}-row seat, and in some scenarios, may also include a 3^{rd}-row seat or more rear-row seats. In addition, to implement a goods carrying function, trunk space is usually further provided behind the rear-row seat, and a trunk trim panel is laid in the trunk space for placing luggage.

With development of an internet of vehicles technology, comfort experience of the cabin plays an increasingly important role in competitiveness of the vehicle. To meet a ride requirement of a user, rear-row seats of most vehicles allow backrests to be folded or laid flat, so that the user can obtain larger trunk space when transporting large luggage. However, because the backrest of the rear-row seat can rotate, a gap is likely to be generated between the seat backrest and the trunk trim panel. For example, FIG. 2 is a diagram of a structure of a seat in different rotating states according to the industry. The seat includes a seat backrest, a seat cushion, and a seat rotating shaft. The seat rotating shaft is movably connected to the seat backrest and the seat cushion, the seat backrest may rotate along the seat cushion under rotation of the seat rotating shaft, and a trunk trim panel is disposed on a rear side of the seat backrest. However, regardless of an unfolded state of the seat backrest shown in (A) in FIG. 2, a bent state of the seat backrest shown in (B) in FIG. 2, or a folded state of the seat backrest shown in (C) in FIG. 2, there is a groove or a gap between the seat backrest and the trunk trim panel. It is clear that such a seat structure is unattractive, and a foreign object is likely to fall into the gap. This is not conductive to a tidiness design of the cabin.

To resolve the foregoing problem, the industry provides a new seat structure. As shown in FIG. 3, the new seat structure uses a rotary baffle plate structure to shield a gap between a seat backrest and a trunk trim panel. Specifically, the baffle plate structure includes a baffle plate 310 and a baffle plate rotating shaft 320 with a spring. One end of the baffle plate 310 is fastened on the baffle plate rotating shaft 320, and the other end rests against the seat backrest. When the seat backrest rotates from an unfolded state shown in (A) in FIG. 3 to a bent state shown in (B) in FIG. 3, and then rotates to a folded state shown in (C) in FIG. 3, the baffle plate 310 rotates with rotation of the seat backrest under an elastic force of the baffle plate rotating shaft 320, to adaptively rest against the seat backrest and shield the gap between the seat backrest and the trunk trim panel.

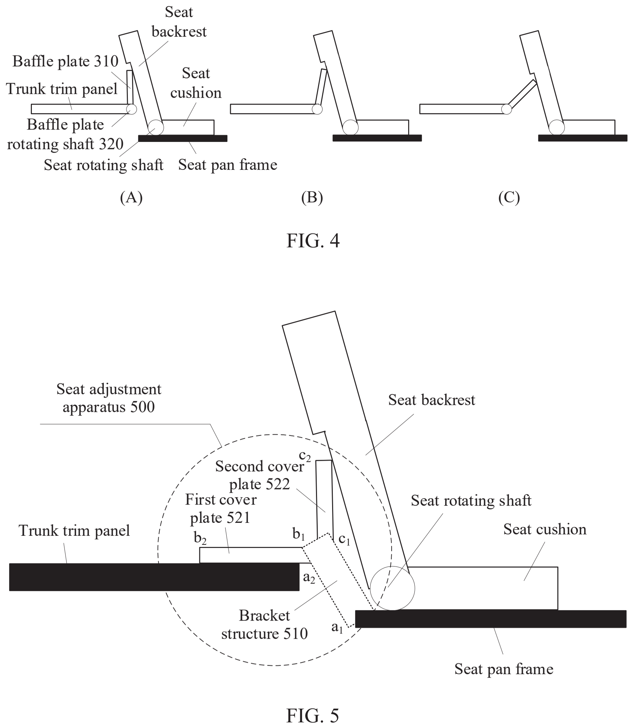

Although the baffle plate structure can perform a shielding function in a process in which the seat backrest rotates, the baffle plate structure is applicable only to a seat having only a backrest rotation function. When the seat has both the backrest rotation function and a forward/backward sliding function, a length of the baffle plate in the baffle plate structure also needs to be correspondingly adjusted. For example, FIG. 4 is a diagram of a structure of an adjusted new seat structure at different sliding positions according to the industry. In comparison with a seat structure having only a backrest rotation function, in a seat structure that can slide forward/backward, a seat pan frame is added. A seat cushion is fastened on the seat pan frame, and may move with the seat pan frame in a direction close to or away from a trunk trim panel. It is considered that the trunk trim panel is usually located on a rear side of the seat backrest. In this case, for ease of understanding, a direction away from the trunk trim panel is referred to as a front direction, and a direction close to the trunk trim panel is referred to as a rear direction. Based on this, with reference to FIG. 3 and FIG. 4, to adapt to a forward sliding stroke of the seat, a length of a baffle plate 310 in the adjusted new seat structure also needs to be correspondingly increased. This makes a shape of a cabin unattractive. In addition, when the seat slides from a rearmost position shown in (A) in FIG. 4 to a middle position shown in (B) in FIG. 4, and then slides to a frontmost position shown in (C) in FIG. 4, an angle of contact between the baffle plate 310 and the seat backrest gradually increases, and consequently, a triangular ineffective area formed among the baffle plate 310, the seat backrest, and the seat cushion also gradually increases. The triangular ineffective area occupies storage space of a trunk. This is an industry pain point in a current seat structure design. Therefore, how to eliminate the triangular ineffective area is crucial to increasing the storage space of the trunk and improve user experience.

In view of this, embodiments of this application provide a seat adjustment apparatus. In the seat adjustment apparatus, a triangular ineffective area among a baffle plate, a seat backrest, and a seat cushion can be eliminated to a maximum extent in a process in which a seat slides forward/backward, occupation of storage space of a trunk trim panel can be reduced, and user experience can be improved. Further, a gap between the trunk trim panel and the seat backrest can be shielded in a process in which the backrest rotates, a foreign object can be prevented from falling into the gap, and aesthetic and tidiness of a cabin can be improved.

The following describes, by using specific embodiments, specific implementations of the seat adjustment apparatus provided in embodiments of this application.

FIG. 5 is a diagram of an example of a structure of a seat adjustment apparatus according to an embodiment of this application. The seat adjustment apparatus 500 may be integrated into a seat, or may exist independently of a seat. In this example, the seat adjustment apparatus 500 includes a bracket structure 510, a first cover plate 521, and a second cover plate 522. A first end (a₁) of the bracket structure 510 is fastened to a seat pan frame of a seat; a second end (a₂) of the bracket structure 510 is connected to a first end (b₁) of the first cover plate 521 and a first end (c₁) of the second cover plate 522, and is configured to implement relative rotation between the first cover plate 521 and the second cover plate 522; a second end (b₂) of the first cover plate 521 presses against a trunk trim panel; and a second end (c₂) of the second cover plate 522 presses against a seat backrest.

As described above, that one component presses against another component means that the component rests against the another component under pressure, and a contact endpoint of the component may only be in contact with the another component without being fastened on the another component, or may be directly fastened on the another component. For example, in the seat adjustment apparatus shown in FIG. 5, the first cover plate 521 rests against the trunk trim panel under gravity, and the second end b₂ of the first cover plate 521 may only be in contact with the trunk trim panel, or may be directly fastened on the trunk trim panel. Correspondingly, the second cover plate 522 rests against the seat backrest by using a reaction force provided by relative rotation with the first cover plate 521, and the second end c₂ of the second cover plate 522 may only be in contact with the seat backrest, or may be directly fastened on the seat backrest. This is not specifically limited. In addition, "press against" described herein is merely a manner of expressing such a connection relationship, and may also have another expression manner. For example, in some embodiments, the connection relationship is also referred to as "rest against". However, it should be understood that both "rest against" and "press against" represent a same meaning, and do not represent an essential difference between "press against" and "rest against".

In some implementations, the first end a₁ of the bracket structure 510 may be connected to the seat pan frame of the seat in any fastened connection manner. For example, the fastened connection manner may be a mechanical connection manner, for example, riveting, a bolt connection, a threaded connection, a key connection, a pin connection, a fastener connection, a lock clasp connection, or insertion; may be a welding manner, for example, arc welding, submerged arc welding, gas metal arc welding, spot welding, laser welding, or another welding manner using electric energy, gas welding, atomic hydrogen welding and casting welding, or another welding manner using chemical energy, or forge welding, cold pressure welding, explosion welding, friction welding, or another welding manner using mechanical energy; or may be a bonding manner, for example, adhesive bonding or solvent bonding.

In some implementations, a rotating connection member may be disposed at the second end a₂ of the bracket structure 510. The rotating connection member may be a hinge, a rotating shaft, a bearing, a hinge, or another component or combined member that can allow relative rotation and movement between two objects. The rotating connection member is connected to the first cover plate 521 and the second cover plate 522, to implement rotation of the second cover plate 522 relative to the first cover plate 521.

In some other implementations, the first cover plate 521 may be connected to the second cover plate 522 through an elastic component. The elastic component is fastened to the bracket structure 510, and may be an elastic portion belonging to the first cover plate 521 or the second cover plate 522, or may be another elastic cover plate that is additionally disposed, and is configured to combine the first cover plate 521 and the second cover plate 522 into one cover plate. In this way, under support of the bracket structure 510, the second cover plate 522 may rotate relative to the first cover plate 521 under an elastic force of the elastic component.

In the seat adjustment apparatus 500 shown in FIG. 5, the first end a₁ of the bracket structure 510 is fastened on the seat pan frame. Therefore, when the seat slides forward/backward with the seat pan frame, the bracket structure 510 may also move forward/backward accordingly, and the second end a₂ of the bracket structure is driven to move forward/backward correspondingly, to drive the second cover plate 522 to move forward/backward accordingly. In this way, in an entire process in which the seat slides forward/backward, a triangular ineffective area formed by the second cover plate 522, the seat backrest, and the bracket structure 510 basically may not change, so that a new ineffective area generated due to forward/backward sliding of the seat can be avoided to a maximum extent, less storage space of a trunk can be occupied, and user experience can be effectively improved. In addition, the first cover plate 521 presses against the trunk trim panel, the second cover plate 522 presses against the seat backrest, and the first cover plate 521 is connected to the second cover plate 522 through the bracket structure 510. Therefore, regardless of which position to which the seat backrest rotates, a gap between the trunk trim panel and the seat backrest can be shielded by the first cover plate 521, the second cover plate 522, and the bracket structure 510. Such design can prevent a foreign object from falling into the gap, and has an attractive and elegant appearance. In addition, such a design is load-bearing, and helps improve aesthetic and tidiness of a cabin.

It should be noted that, in the seat adjustment apparatus 500, the bracket structure 510, the first cover plate 521, or the second cover plate 522 may be made of a rigid material and/or a flexible material, provided that the second end a₂ of the bracket structure 510 and the second cover plate 522 can move forward/backward correspondingly as the seat pan frame slides forward/backward. To make the solution in embodiments of this application clearer, the following further describes several possible specific implementations of the bracket structure 510, the first cover plate 521, and the second cover plate 522 in the seat adjustment apparatus 500 based on the seat adjustment apparatus 500 shown in FIG. 5.

### Implementation solution 1

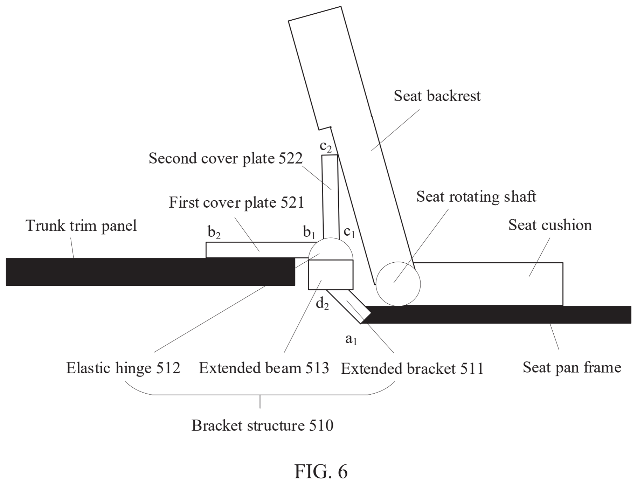

FIG. 6 is a diagram of a specific structure of a seat adjustment apparatus according to an embodiment of this application. The seat adjustment apparatus 500 includes the bracket structure 510, the first cover plate 521, and the second cover plate 522. The bracket structure 510 includes an extended bracket 511 and an elastic hinge 512. A first end of the extended bracket 511 is the first end a₁ of the bracket structure 510. The first end a₁ is fastened to the seat pan frame. The elastic hinge 512 is fastened at a second end (d₂) of the extended bracket 511, and is connected to the first end b₁ of the first cover plate 521 and the first end c₁ of the second cover plate 522. The first cover plate 521 presses against the trunk trim panel, and the second end b₂ of the first cover plate 521 is in contact with the trunk trim panel but is not fastened on the trunk trim panel. Correspondingly, the second end c₂ of the second cover plate 522 presses against the seat backrest, and the second end c₂ is in contact with the seat backrest but is not fastened on the seat backrest.

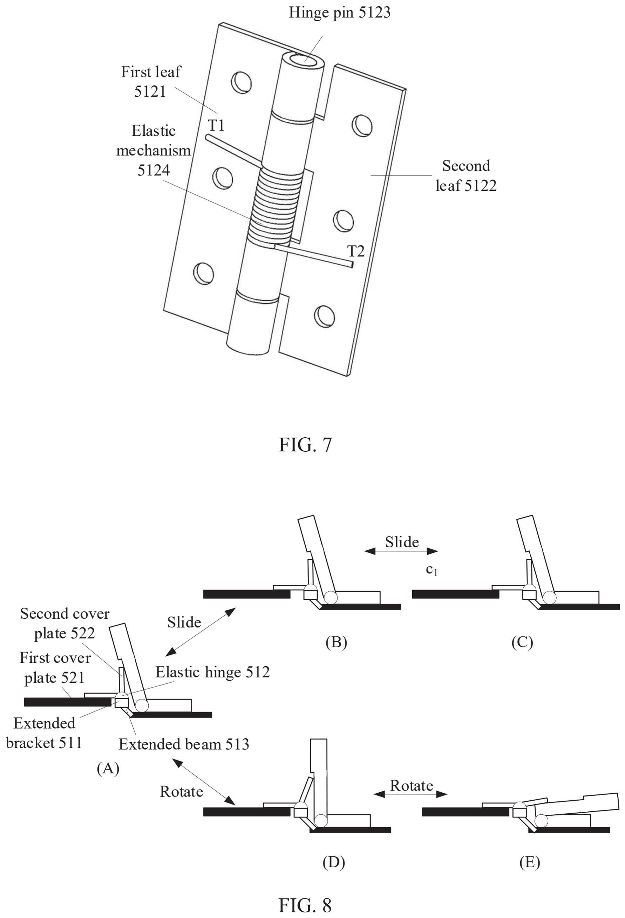

Specifically, the elastic hinge 512 means a hinge on which an elastic mechanism is mounted, and the elastic mechanism may be a spring, a coil spring, or another similar structure. FIG. 7 is a diagram of a structure of an elastic hinge according to an embodiment of this application. The elastic hinge 512 includes a first leaf 5121, a second leaf 5122, a hinge pin 5123, and an elastic mechanism 5124. The first leaf 5121 and the second leaf 5122 each surround the hinge pin 5123, and may rotate with the hinge pin 5123. The elastic mechanism 5124 is wound around the hinge pin 5123, and two spring-loaded ends T1 and T2 of the elastic mechanism 5124 are in contact with the first leaf 5121 and the second leaf 5122 respectively. During implementation, the first end b₁ of the first cover plate 521 may be mounted in at least one hole of the first leaf 5121 through cooperation between a screw and a nut or in another cooperation manner, to fasten the first cover plate 521 to the first leaf 5121. Correspondingly, the first end c₁ of the second cover plate 522 may be mounted in at least one hole of the second leaf 5122 through cooperation between a screw and a nut or in another cooperation manner, to fasten the second cover plate 522 to the second leaf 5122. The structure of the elastic hinge is used, so that, in a process in which the seat backrest rotates or the seat slides forward/backward, the second leaf 5122 can rotate, under an elastic force of the elastic mechanism 5124, in a direction in which the seat backrest rotates, to drive the second cover plate 522 that is fastened on the second leaf 5122 to rotate.

In some embodiments, still with reference to FIG. 6, the bracket structure 510 may further include an extended beam 513. The extended beam 513 is fastened at the second end d₂ of the extended bracket 511, and is configured to mount the elastic hinge 512, to implement a fastening and supporting function. It should be noted that the elastic hinge 512 and the extended beam 513 may be mounted in any mounting manner that does not affect rotation of the hinge pin 5123. For example, a hole or a groove may be provided on the extended beam 513, and the hinge pin 5123 is clamped to the hole or the groove. Alternatively, a carrying bracket may be disposed on the hinge pin 5123, and the carrying bracket is fastened on the extended beam 513. There are a plurality of possible mounting manners, which are not enumerated herein again.

Based on the seat adjustment apparatus shown in FIG. 6, FIG. 8 is a diagram of an example of a structure of the seat structure in different states according to an embodiment of this application. (A) in FIG. 8 shows a state in which the seat is located on a rearmost side and the seat backrest is unfolded at a maximum angle, (B) in FIG. 8 shows a state in which the seat slides forward to a middle position, (C) in FIG. 8 shows a state in which the seat slides forward to a frontmost side, (D) in FIG. 8 shows a state in which the seat backrest rotates to a middle position, and (E) in FIG. 8 shows a state in which the seat backrest rotates to be folded.

With reference to FIG. 6 and (A) in FIG. 8 to (C) in FIG. 8, the first end a₁ of the extended bracket 511 is fastened on the seat pan frame. Therefore, in a process in which the seat pan frame drives the seat to slide forward, the extended bracket 511 that is fastened on the seat pan frame, the extended beam 513 that is fastened at the second end d₂ of the extended bracket 511, and the elastic hinge 512 that is fastened on the extended beam 513 also move forward accordingly, to drive the first cover plate 521 to slide in a direction away from the trunk trim panel, and the second cover plate 522 rotates relative to the first cover plate 521 under an elastic force of the elastic hinge 512, to adaptively adjust a position at which the second end c₂ of the second cover plate 522 is in contact with the seat backrest, thereby resting against the seat backrest. On the contrary, in a process in which the seat pan frame drives the seat to slide backward, the extended bracket 511 that is fastened on the seat pan frame, the extended beam 513 that is fastened at the second end d₂ of the extended bracket 511, and the elastic hinge 512 that is fastened on the extended beam 513 also slide backward accordingly, to drive the first cover plate 521 to slide in a direction close to the trunk trim panel, and the second cover plate 522 rotates relative to the first cover plate 521 under the elastic force of the elastic hinge, to adaptively adjust the position at which the second end c₂ of the second cover plate 522 is in contact with the seat backrest, thereby resting against the seat backrest.

In some embodiments, to ensure that the first cover plate 521 can cover a groove and a gap generated between the trunk trim panel and the seat backrest in a process in which the seat slides forward/backward, a length of the first cover plate 521 needs to be configured to be greater than a total sliding stroke of the seat pan frame. For example, the length of the first cover plate 521 may be configured to be slightly greater than a sum of the total sliding stroke of the seat pan frame and a distance, present when the seat is located at the rearmost side, between the trunk trim panel and the elastic hinge 512. In this way, the groove and the gap generated by the forward/backward sliding of the seat can be effectively shielded, aesthetic is ensured, and a foreign object can be prevented from falling into the gap. In addition, a manufacturing material can be saved, to reduce weight.

It should be noted that, in the process in which the seat slides forward/backward, a stroke of the first cover plate 521 sliding forward/backward on the trunk trim panel is approximately equal to a stroke of the seat pan frame sliding forward/backward (or may be, due to a friction force between the first cover plate 521 and the trunk trim panel, slightly less than the stroke of the seat pan frame sliding forward/backward), so that the second cover plate 522 basically does not rotate relative to the first cover plate 521, and the triangular ineffective area formed among the second cover plate 522, the bracket structure 510, and the seat backrest also basically does not change. Refer to (A) in FIG. 8 to (C) in FIG. 8, the triangular ineffective area is extremely small, and may be ignored when compared with entire large trunk space. It can be learned that, the seat adjustment apparatus 500 shown in FIG. 6 is used, so that, in the entire process in which the seat slides forward/backward, the triangular ineffective area is basically eliminated, space waste of the trunk space in the entire sliding process is minimized, utilization of the trunk space is effectively maximized, an industry problem of occupation of the trunk space is resolved, and storage experience of a user is significantly improved.

With reference to FIG. 6, (A) in FIG. 8, (D) in FIG. 8, and (E) in FIG. 8, the second cover plate 522 rotates relative to the first cover plate 521 by using the elastic hinge 512. In a process in which the seat backrest rotates clockwise, the second cover plate 522 rotates clockwise accordingly under an elastic force of the elastic hinge 512, to adaptively adjust a position at which the second end c₂ of the second cover plate 522 is in contact with the seat backrest, thereby resting against the seat backrest. Such a contact manner effectively shields the groove and the gap between the seat backrest and the trunk trim panel in a process of adjusting an angle of the seat backrest. Specially, when the seat backrest rotates to the folded state shown in (E) in FIG. 8, the elastic hinge 512 is in a minimum compression state, and the second cover plate 522, the elastic hinge 512, and the first cover plate 521 approximately form a plane, where the plane effectively shields the groove and the gap between the folded seat backrest and the trunk trim panel. On the contrary, in a process in which the seat backrest rotates counterclockwise, the second cover plate 522 rotates counterclockwise under the elastic force of the elastic hinge 512 accordingly. When the seat backrest rotates to an unfolded state shown in (A) in FIG. 8, the elastic hinge 512 is in a maximum compression state, and the second cover plate 522 provides a maximum press-fitting force for the seat backrest under the elastic force of the elastic hinge 512, and adaptively adjusts the position at which the second end c₂ of the second cover plate 522 is in contact with the seat backrest, to rest against the seat backrest. It can be learned that, the seat adjustment apparatus 500 shown in FIG. 6 is used, so that, in an entire process in which the seat backrest rotates, the groove and the gap between the trunk trim panel and the seat backrest can be effectively shielded, so that aesthetic can be ensured, and a foreign object can be prevented from falling into the gap.

It should be noted that, the minimum compression state of the elastic hinge 512 may be considered as a most relaxed state of the elastic mechanism 5124 in the elastic hinge 512. Generally, the elastic mechanism 5124 may be configured to still have specific compression in this state, so that specific pressure can still be provided for the seat backrest in the state in which the seat backrest is folded, to prevent the seat backrest from suddenly bouncing up.

In Implementation solution 1, the elastic hinge is a common rotating connection member. The elastic hinge is used, to implement relative rotation of the first cover plate and the second cover plate, so that, under the elastic force of the elastic hinge, the groove and the gap generated in the process in which the seat backrest rotates can be shielded, and the triangular ineffective area generated in the process in which the seat slides forward/backward can be reduced. In addition, manufacturing costs of the seat adjustment apparatus can be reduced, and the structure and a mounting manner of the seat adjustment apparatus can be simplified.

### Implementation solution 2

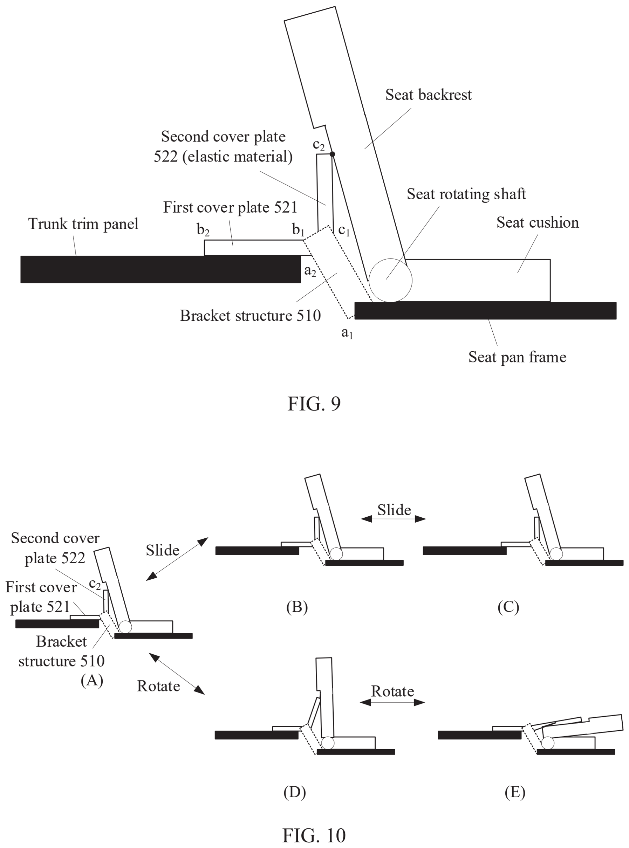

FIG. 9 is a diagram of a specific structure of another seat adjustment apparatus according to an embodiment of this application. The seat adjustment apparatus 500 includes the bracket structure 510, the first cover plate 521, and the second cover plate 522. The first end a₁ of the bracket structure 510 is fastened on the seat pan frame of the seat, the second end a₂ of the bracket structure 510 is connected to the first end b₁ of the first cover plate 521 and the first end c₁ of the second cover plate 522, and the second end b₂ of the first cover plate 521 presses against the trunk trim panel, and is in contact with the trunk trim panel but is not fastened on the trunk trim panel. The second cover plate 522 includes an elastic material, and the second end c₂ of the second cover plate 522 is fastened on the seat backrest. That the second cover plate 522 includes the elastic material may mean that the second cover plate 522 is made of the elastic material, for example, is entirely made of the elastic material, or is made of a mixture of the elastic material and a non-elastic material. The elastic material may be elastic fabric, spring steel, rubber, sponge, latex, or the like, or may be a cross-linked reaction product of a mixture of polymer hydrogel and at least one of uncured elastic fabric, spring steel, rubber, sponge, or latex, or another elastic material.

FIG. 10 is a diagram of a structure of the seat structure in this implementation in different states according to an embodiment of this application. (A) in FIG. 10 shows a state in which the seat is located on a rearmost side and the seat backrest is unfolded at a maximum angle, (B) in FIG. 10 shows a state in which the seat slides forward to a middle position, (C) in FIG. 10 shows a state in which the seat slides forward to a frontmost side, (D) in FIG. 10 shows a state in which the seat backrest rotates to a middle position, and (E) in FIG. 10 shows a state in which the seat backrest rotates to be folded.

With reference to FIG. 9 and (A) in FIG. 10 to (C) in FIG. 10, in a process in which the seat pan frame drives the seat to slide forward/backward, the bracket structure 510 that is fastened on the seat pan frame also slides forward/backward accordingly, to drive the first cover plate 521 that is connected to the bracket structure 510 to slide forward/backward. Further, the second end c₂ of the second cover plate 522 is fastened on the seat backrest. Therefore, when a stroke of the first cover plate 521 that slides forward/backward on the trunk trim panel is slightly less than a stroke of the seat pan frame that slides forward/backward due to a friction force, the second cover plate 522 may deform under an action of an elastic material of the second cover plate 522, and may be adaptively attached to the seat backrest closely, to eliminate a triangular ineffective area formed among the second cover plate 522, the bracket structure 510 to a maximum extent, and the seat backrest, reduce space waste of trunk space in an entire sliding process, and effectively maximize utilization of the trunk space.

With reference to FIG. 9, (A) in FIG. 10, (D) in FIG. 10, and (E) in FIG. 10, in a process in which the seat backrest rotates clockwise or counterclockwise, the second cover plate 522 rotates as the seat backrest rotates. Further, the second end c₂ of the second cover plate 522 is fastened on the seat backrest. Therefore, the elastic material of the second cover plate 522 may deform in the rotation process, and may be adaptively attached to the seat backrest closely, to effectively shield, through stretching or compression and deformation of the elastic material, a groove and a gap between the seat backrest and the trunk trim panel in a process of adjusting an angle of the seat backrest. Specially, when the seat backrest rotates to a folded state shown in (E) in FIG. 10, the elastic material of the second cover plate 522 is stretched to the longest, and the stretched elastic material and the first cover plate 521 approximately form a plane, so that a groove and a gap between the folded seat backrest and the trunk trim panel is effectively shielded.

It should be noted that, in Implementation solution 2, the bracket structure 510 may include only one extended bracket, configured to support the first cover plate 521 and the second cover plate 522. In this case, the seat adjustment apparatus 500 may be adaptively stretched or shortened directly through elastic deformation of the second cover plate 522 as the seat slides forward/backward or the seat backrest rotates, to adapt to the seat backrest whose position is changed. Alternatively, the bracket structure 510 may include an extended bracket and a movable connection member that is disposed at one end of the extended bracket. The movable connection member may be, for example, the elastic hinge in Implementation solution 1, so that an adaptive adjustment process of the second cover plate 522 can be smoother. Certainly, there may be other implementations for the bracket structure 510, which are not enumerated herein again.

In Implementation solution 2, the elastic material has a lighter weight than a rigid material. The second cover plate is made by using the elastic material, and the second end of the second cover plate is fastened on the seat backrest, so that, through scalable deformation of the elastic material, the groove and the gap generated in the process in which the seat backrest rotates can be shielded, and the triangular ineffective area generated in the process in which the seat slides forward/backward can be reduced. In addition, a weight of the seat adjustment apparatus can be reduced. This helps realize a lightweight design of a mobile device.

### Implementation solution 3

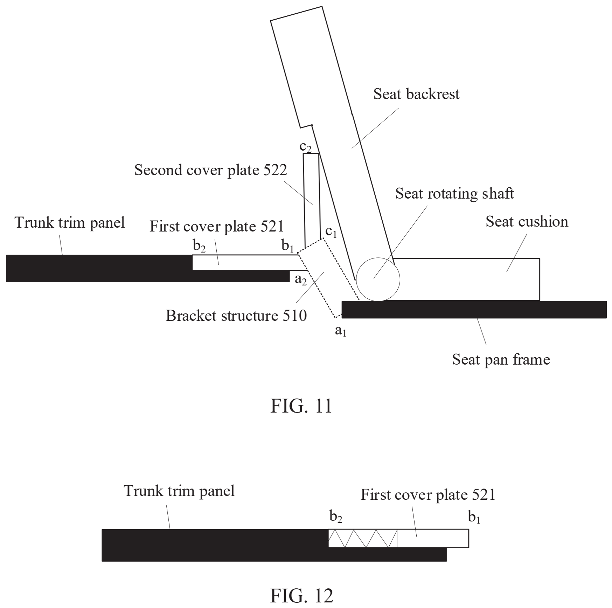

FIG. 11 is a diagram of a specific structure of still another seat adjustment apparatus according to an embodiment of this application. The seat adjustment apparatus 500 includes the bracket structure 510, the first cover plate 521, and the second cover plate 522. The first end a₁ of the bracket structure 510 is fastened on the seat pan frame of the seat, the second end a₂ of the bracket structure 510 is connected to the first end b₁ of the first cover plate 521 and the first end c₁ of the second cover plate 522. An opening groove is provided at a position that is of the trunk trim panel and that corresponds to the first cover plate 521, and the first cover plate 521 is embedded into the opening groove, so that the second end b₂ of the first cover plate 521 presses against the trunk trim panel. The second end c₂ of the second cover plate 522 presses against the seat backrest. A width of the groove in a direction perpendicular to a paper plane shown in FIG. 11 is slightly less than a width of the trunk trim panel in the direction perpendicular to the paper plane shown in FIG. 11. It may be considered that a concave slide rail is provided at a position of the trunk trim panel relative to the first cover plate 521, the first cover plate 521 is placed in the slide rail, and the first cover plate 521 may slide in the slide rail accordingly in a process in which the seat slides forward/backward or the seat backrest rotates.

In some embodiments, it is considered that a groove is generated between the first cover plate 521 and the trunk trim panel when the first cover plate 521 slides forward in the opening groove, and a foreign object is likely to fall into the groove and is difficult to clean. In this case, to prevent the groove from being formed in a sliding process, FIG. 12 is a diagram of an example of a specific structure of the first cover plate according to an embodiment of this application. In this example, the second end b₂ of the first cover plate 521 may include an elastic material, and the second end b₂ of the first cover plate 521 is fastened to an end of the opening groove relative to the first cover plate 521. In this way, even if the first end b₁ of the first cover plate 521 slides forward/backward, the entire opening groove can be completely covered through stretching or compression of the elastic material at the second end b₂, to ensure that there is no gap at a position at which the first cover plate 521 is in contact with the trunk trim panel, so that a foreign object is effectively prevented from falling into the gap.

It should be noted that the second end b₂ of the first cover plate 521 may be directly realized by using an elastic mechanism, for example, a spring or a coil spring, or an elastic mechanism, for example, a spring or a coil spring, disposed inside the second end b₂ and wrapped with a soft housing, for example, elastic fabric, on the outside, to make a more attractive appearance of the first cover plate 521.

In some embodiments, still with reference to FIG. 11, an upper surface of the first cover plate 521 is flush with an upper surface of the trunk trim panel. In other words, there is no height difference between the first cover plate 521 and the trunk trim panel. In this way, aesthetic of the cabin can be improved. In addition, a boss or a dent can be prevented from being generated between the first cover plate 521 and the trunk trim panel in the process in which the seat moves forward/backward or the seat backrest rotates. This facilitates placement of luggage, and improves practicability.

However, it should be understood that, in another embodiment, the upper surface of the first cover plate 521 may alternatively be higher than or lower than the upper surface of the trunk trim panel. Even if the upper surface of the first cover plate 521 is higher than the upper surface of the trunk trim panel, because a portion of the first cover plate 521 sinks into the opening groove, space occupied by the first cover plate 521 exposed outside the trunk trim panel can be reduced, and less storage space of a trunk can be occupied. Alternatively, even if the upper surface of the first cover plate 521 is lower than the upper surface of the trunk trim panel, because the entire first cover plate 521 sinks into the opening groove, storage space of a trunk is not occupied, and an additional groove for placing small luggage can be further provided, so that the storage space of the trunk is further expanded.

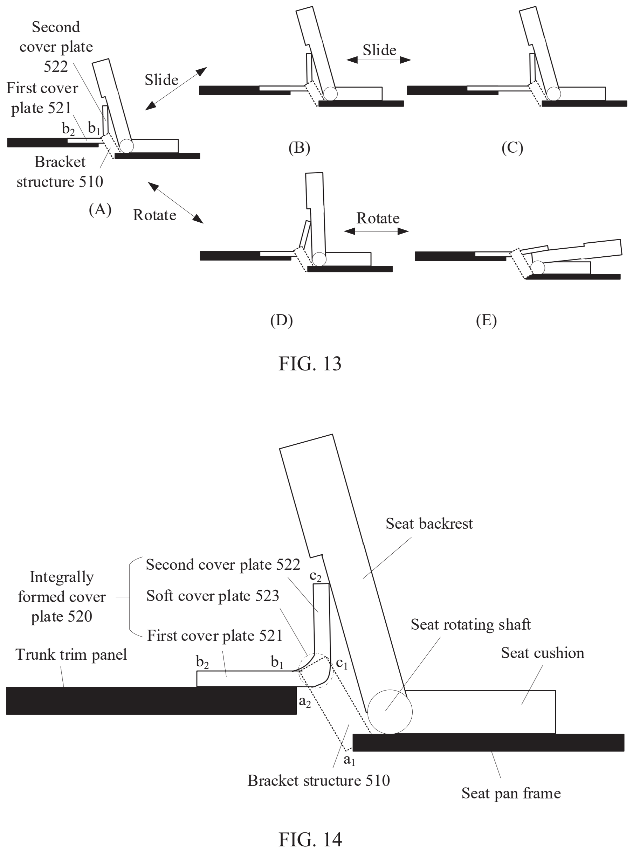

FIG. 13 is a diagram of a structure of the seat structure in this implementation in different states according to an embodiment of this application. (A) in FIG. 13 shows a state in which the seat is located on a rearmost side and the seat backrest is unfolded at a maximum angle, (B) in FIG. 13 shows a state in which the seat slides forward to a middle position, (C) in FIG. 13 shows a state in which the seat slides forward to a frontmost side, (D) in FIG. 13 shows a state in which the seat backrest rotates to a middle position, and (E) in FIG. 13 shows a state in which the seat backrest rotates to be folded.

With reference to FIG. 11 and (A) in FIG. 13 to (C) in FIG. 13, in a process in which the seat pan frame drives the seat to slide forward/backward, the bracket structure 510 that is fastened on the seat pan frame also moves forward/backward accordingly, to drive the second cover plate 522 that is connected to the bracket structure 510 and the first end b₁ of the first cover plate 521 to move forward/backward. Forward/backward movement of the second cover plate 522 can lead to occupation of less storage space of the trunk. For details, refer to the foregoing content. Details are not described herein again. When the first end b₁ of the first cover plate 521 moves forward/backward, because the second end b₂ of the first cover plate 521 is fastened on the trunk trim panel, the elastic material of the first cover plate 521 may change a stretching or compression length of the first cover plate 521 under an external force. When the seat slides backward, a squeezing force applied to the elastic material of the first cover plate 521 by the opening groove of the trunk trim panel increases, and a length of the elastic material is shortened. When the seat slides forward, a squeezing force applied to the elastic material of the first cover plate 521 by the opening groove of the trunk trim panel reduces, and a length of the elastic material is prolonged. However, regardless of whether the seat slides forward or backward, the first cover plate 521 covers the entire opening groove of the trunk trim panel throughout, and remains on the same plane as the trunk trim panel. The entire structure is attractive and practical.

With reference to FIG. 11, (A) in FIG. 13, (D) in FIG. 13, and (E) in FIG. 13, in a process in which the seat backrest rotates clockwise or counterclockwise, the second cover plate 522 rotates as the seat backrest rotates, to adaptively press against the seat backrest, and the first cover plate 521 covers the opening groove of the trunk trim panel throughout the process, and remains on the same plane as the trunk trim panel.

In Implementation solution 3, the opening groove is provided on the trunk trim panel, and the first cover plate sinks into the opening groove, to form the plane with the trunk trim panel, and the first cover plate is disposed to be elastically connected to an end of the trunk trim panel, so that the first cover plate can always form the same plane with the trunk trim panel in the process in which the seat slides forward/backward and the seat backrest rotates, to ensure that there is no gap at the position at which the first cover plate is in contact with the trunk trim panel, and prevent a foreign object from falling into the gap. This is attractive and practical.

### Implementation solution 4

FIG. 14 is a diagram of a specific structure of yet another seat adjustment apparatus according to an embodiment of this application. The seat adjustment apparatus 500 includes the bracket structure 510 and an integrally formed cover plate 520. The integrally formed cover plate 520 includes the first cover plate 521, a soft cover plate 523, and the second cover plate 522. The first end b₁ of the first cover plate 521 is connected to one end of the soft cover plate 523, the other end of the soft cover plate 523 is connected to the first end c₁ of the second cover plate 522, the second end b₂ of the first cover plate 521 presses against the trunk trim panel, and the second end c₂ of the second cover plate 522 presses against the seat backrest. The first end a₁ of the bracket structure 510 is fastened on the seat pan frame of the seat, and the second end a₂ of the bracket structure 510 is fastened to the soft cover plate 523. The first cover plate 521 may press against the trunk trim panel in a contact but not fastened manner described in Implementation solution 1 or in a fastened connection manner described in Implementation solution 3. The second cover plate 522 may press against the seat backrest in a contact but not fastened manner described in Implementation solution 1 or in a fastened connection manner described in Implementation solution 2. This is not specifically limited in this embodiment of this application. In addition, the bracket structure 510 may include only one extended bracket, or may include the extended bracket and the elastic hinge as described in Implementation solution 1. This is not specifically limited in this embodiment of this application.

In some embodiments, the soft cover plate 523 is made of a soft material. The soft material may be a blanket, elastic fabric, rubber, a thread buckle, silicone, a thermoplastic polyurethane (thermoplastic polyurethane, TPU) elastomer, a thermoplastic elastomer (thermoplastic elastomer, TPE), a thermoplastic rubber (thermoplastic rubber, TPR), or another elastic material. The soft material is connected to the first end of the first cover plate 521 and the first end of the second cover plate 522. For example, the soft material may be connected to the first end of the first cover plate 521 and the first end of the second cover plate 522 in a manner, for example, a flexible connection or a weakened connection (for example, a Lock&Lock weakened structure). When the seat backrest is folded, the soft material is in a minimum compression state. In a process in which the seat slides forward/backward or the seat backrest rotates, the soft material is compressed or relaxed accordingly, so that the second cover plate 522 rotates around the first cover plate 521 under pressure of the soft material, to adaptively adjust a position at which the second cover plate 522 presses against the seat backrest.

In Implementation solution 4, the first cover plate and the second cover plate are made into an integrated cover plate by using the soft material, so that an effect that can be realized by the seat adjustment apparatus 500 shown in FIG. 5 can be realized, and aesthetic of the seat structure can be further improved.

It should be noted that the foregoing merely describes several possible implementation solutions of the seat adjustment apparatus 500 as examples. During implementation, some variations may be made to the foregoing implementation solutions to obtain a new implementation solution. The following describes several possible variant solutions as examples.

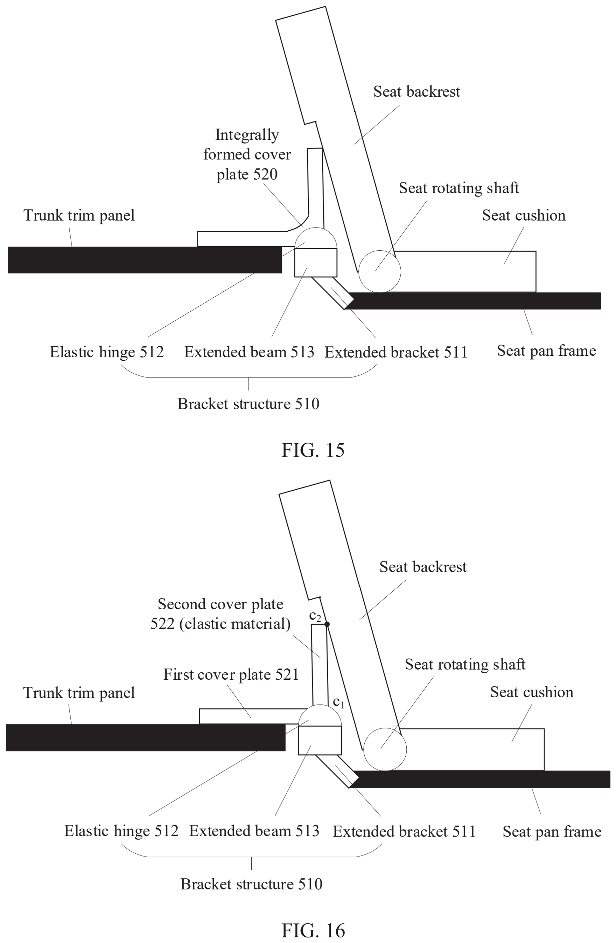

FIG. 15 is a diagram of a structure of still another seat adjustment apparatus according to an embodiment of this application. In this variant, with reference to the bracket structure design in Implementation solution 1 and the integrally formed cover plate design in Implementation solution 4, an elastic hinge 512 is disposed at a second end of a bracket structure 510, a first cover plate 521 is fastened on one leaf of an elastic hinge 512, a second cover plate 522 is fastened on the other leaf of the elastic hinge 512, and the first cover plate 521 and the second cover plate 522 are combined into one cover plate by using a soft material. In this way, storage space of a trunk is not occupied and a gap between a trunk trim panel and a seat backrest can be covered in a process in which a seat slides forward/backward and the seat backrest rotates, appearance can look attractive and elegant, and visual experience of a user can be improved.

FIG. 16 is a diagram of a structure of another seat adjustment apparatus according to an embodiment of this application. In this variant, with reference to the bracket structure design in Implementation solution 1 and the second cover plate design in Implementation solution 2, an elastic hinge 512 is disposed at a second end of a bracket structure 510, a first end c₁ of a second cover plate 522 is fastened on one leaf of the elastic hinge 512, a second end c₂ of the second cover plate 522 is fastened on a seat backrest, and the second cover plate 522 includes an elastic material. In this way, storage space of a trunk is not occupied and a gap between a trunk trim panel and the seat backrest can be covered in a process in which a seat slides forward/backward and the seat backrest rotates, and a weight can be reduced by using the elastic material.

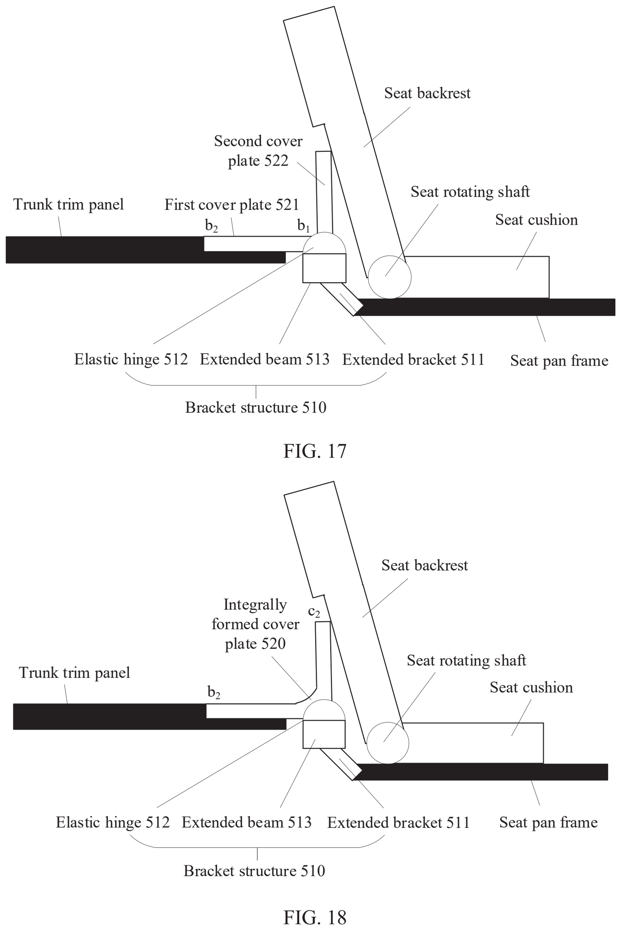

FIG. 17 is a diagram of a structure of yet another seat adjustment apparatus according to an embodiment of this application. In this variant, with reference to the bracket structure design in Implementation solution 1 and the first cover plate design in Implementation solution 3, an elastic hinge 512 is disposed at a second end of a bracket structure 510, a first end b₁ of the first cover plate 521 is fastened to an opening groove end of a trunk trim panel, the first cover plate 521 sinks into the opening groove, and a second end b₂ of the first cover plate 521 is fastened on one leaf of the elastic hinge 512. In this way, storage space of a trunk is not occupied and a gap between a trunk trim panel and a seat backrest can be covered in a process in which a seat slides forward/backward and the seat backrest rotates. In addition, the first cover plate can always form a same plane with the trunk trim panel in the process in which the seat slides forward/backward and the seat backrest rotates, to ensure that there is no gap at a position at which the first cover plate is in contact with the trunk trim panel, and prevent a foreign object from falling into the gap. This is attractive and practical.

FIG. 18 is a diagram of a structure of another seat adjustment apparatus according to an embodiment of this application. In this variant, with reference to the bracket structure design in Implementation solution 1, the first cover plate design in Implementation solution 3, and the integrally formed cover plate design in Implementation solution 4, a first cover plate 521 and a second cover plate 522 are combined into one integrally formed cover plate 520 by using a soft material, and an elastic hinge 512 is disposed on a second end of a bracket structure 510. One side of the soft material is fastened on one leaf of the elastic hinge 512, the other side of the soft material is fastened on the other leaf of the elastic hinge 512, and a portion that is of the cover plate and that is on a side corresponding to a trunk trim panel sinks into an opening groove of the trunk trim panel. In this way, storage space of a trunk is not occupied and a gap between the trunk trim panel and a seat backrest can be covered in a process in which a seat slides forward/backward and the seat backrest rotates. In addition, the first cover plate can always form a same plane with the trunk trim panel in the process in which the seat slides forward/backward and the seat backrest rotates, to ensure that there is no gap at a position at which the first cover plate is in contact with the trunk trim panel, and prevent a foreign object from falling into the gap. This is attractive and practical. Moreover, appearance can look attractive and elegant, and visual experience of a user can be improved.

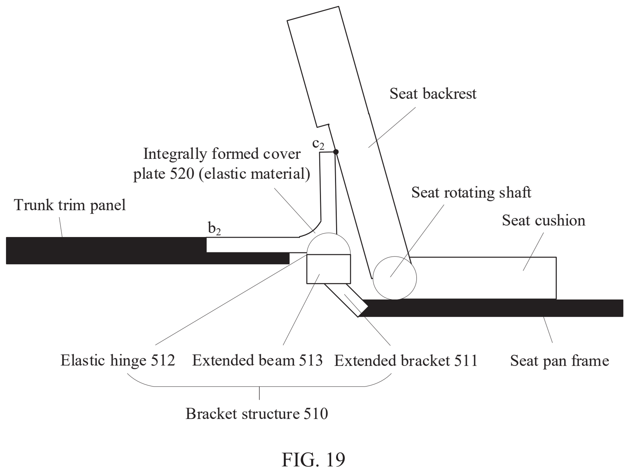

FIG. 19 is a diagram of a structure of still another seat adjustment apparatus according to an embodiment of this application. In this variant, with reference to the bracket structure design in Implementation solution 1, the second cover plate design in Implementation solution 2, the first cover plate design in Implementation solution 3, and the integrally formed cover plate design in Implementation solution 4, an integrally formed cover plate 520 is made by using an elastic material, and an elastic hinge 512 is disposed on a second end of a bracket structure 510. One end of a middle position of the integrally formed cover plate 520 is fastened on one leaf of the elastic hinge 512, the other end of the middle position is fastened on the other leaf of the elastic hinge 512, a portion that is of the cover plate and that is on a side corresponding to a trunk trim panel sinks into an opening groove of the trunk trim panel, and an end of the cover plate on the side is fastened on a seat backrest. In this way, storage space of a trunk is not occupied and a gap between the trunk trim panel and a seat backrest can be covered in a process in which a seat slides forward/backward and the seat backrest rotates. In addition, the first cover plate can always form a same plane with the trunk trim panel in the process in which the seat slides forward/backward and the seat backrest rotates, to ensure that there is no gap at a position at which the first cover plate is in contact with the trunk trim panel, and prevent a foreign object from falling into the gap. This is attractive and practical. Moreover, appearance can look attractive and elegant, visual experience of a user can be improved, and a weight can be reduced by using the elastic material.

It should be understood that there are still a plurality of possible variations, which are not enumerated in this embodiment of this application.

It should be noted that the foregoing embodiment merely describes several possible implementations of the seat adjustment apparatus in a cabin domain as examples. The seat adjustment apparatus may be further used in a field other than the cabin domain, for example, a smart home field or an industrial remote control field. This is not specifically limited.

In addition, with evolution of a system architecture and emergence of a new scenario, the seat control apparatus provided in embodiments of this application is also applicable to a similar technical problem. This is not specifically limited in embodiments of this application.

According to the seat control apparatus provided in embodiments of this application, embodiments of this application further provide a seat structure. The seat structure includes the foregoing seat control apparatus, the trunk trim panel, the seat pan frame, and the seat.

According to the seat control apparatus provided in embodiments of this application, embodiments of this application further provide a mobile device. The mobile device includes the seat structure described in the foregoing content. Some examples of mobile devices include but are not limited to a vehicle, a ship, an uncrewed aerial vehicle, a train, a lorry, a truck, and the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A seat adjustment apparatus, comprising:
a bracket structure, a first cover plate, and a second cover plate, wherein
a first end of the bracket structure is fastened to a seat pan frame of a seat;
a second end of the bracket structure is connected to a first end of the first cover plate and a first end of the second cover plate, and is configured to implement relative rotation between the first cover plate and the second cover plate;
a second end of the first cover plate presses against a trunk trim panel; and
a second end of the second cover plate presses against a backrest of the seat.

2. The apparatus according to claim 1, wherein
the bracket structure comprises an extended bracket and an elastic hinge;
a first end of the extended bracket is the first end of the bracket structure; and
the elastic hinge is fastened at a second end of the extended bracket, and is connected to the first end of the first cover plate and the first end of the second cover plate.

3. The apparatus according to claim 2, wherein
the bracket structure further comprises an extended beam;
the extended beam is fastened at the second end of the extended bracket; and
the elastic hinge is mounted on the extended beam.

4. The apparatus according to any one of claims 1 to 3, wherein
the first cover plate and the second cover plate are integrally formed.

5. The apparatus according to claim 4, wherein
the first end of the first cover plate is connected to the first end of the second cover plate through a soft material.

6. The apparatus according to any one of claims 1 to 5, wherein
the second cover plate comprises an elastic material, and the second end of the second cover plate is fastened to the backrest of the seat.

7. The apparatus according to any one of claims 1 to 6, wherein
an opening groove is provided on the trunk trim panel, and the second end of the first cover plate is embedded into the opening groove.

8. The apparatus according to claim 7, wherein
an upper surface of the trunk trim panel is flush with an upper surface of the first cover plate.

9. The apparatus according to claim 7 or 8, wherein
the second end of the first cover plate comprises an elastic material, and the second end of the first cover plate is fastened to an end of the opening groove relative to the first cover plate.

10. A seat structure, comprising a seat, a seat pan frame, a trunk trim panel, and the seat adjustment apparatus according to any one of claims 1 to 9, wherein
the seat pan frame is disposed below the seat, and is configured to drive the seat to slide; and
the trunk trim panel is disposed behind the seat, and is used for placing luggage.

11. A mobile device, comprising the seat structure according to claim 10.
